(19) **Europäisches Patentamt / European Patent Office / Office européen des brevets**

(11) **EP 4 303 952 A1**

(12) # EUROPEAN PATENT APPLICATION
published in accordance with Art. 153(4) EPC

(43) Date of publication:
**10.01.2024 Bulletin 2024/02**

(21) Application number: **22763143.9**

(22) Date of filing: **25.02.2022**

(51) International Patent Classification (IPC):
*H01M 4/131* (2010.01)   *H01M 4/485* (2010.01)
*H01M 4/505* (2010.01)   *H01M 4/62* (2006.01)
*H01M 10/052* (2010.01)   *H01M 10/0562* (2010.01)
*H01M 10/0585* (2010.01)

(52) Cooperative Patent Classification (CPC):
**H01M 4/131; H01M 4/485; H01M 4/505;**
**H01M 4/62; H01M 10/0562; H01M 10/0585;**
H01M 10/052; Y02E 60/10

(86) International application number:
**PCT/JP2022/008034**

(87) International publication number:
**WO 2022/186087 (09.09.2022 Gazette 2022/36)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **01.03.2021 JP 2021031887**

(71) Applicant: **Murata Manufacturing Co., Ltd.**
**Nagaokakyo-shi, Kyoto 617-8555 (JP)**

(72) Inventor: **TAKANO, Ryohei**
**Nagaokakyo-shi, Kyoto 617-8555 (JP)**

(74) Representative: **Reeve, Nicholas Edward**
**Reddie & Grose LLP**
**The White Chapel Building**
**10 Whitechapel High Street**
**London E1 8QS (GB)**

(54) **SOLID-STATE BATTERY**

(57) Provided is a solid-state battery capable of more sufficiently suppressing a decrease in utilization factor of a negative electrode active material although when a garnet-type solid-state electrolyte is contained in a negative electrode layer. The present invention relates to: a solid-state battery including a positive electrode layer, a negative electrode layer, and a solid-state electrolyte layer disposed between the positive electrode layer and the negative electrode layer, wherein the negative electrode layer includes a negative electrode active material containing Li (lithium), M [M is one or more elements selected from the group consisting of W (tungsten), Mo (molybdenum), Ta (tantalum), and Zr (zirconium)], and O (oxygen), and having a molar ratio (Li/M) of a Li content to a M content of more than 2.0, and a garnet-type solid-state electrolyte.

EP 4 303 952 A1

**Description**

TECHNICAL FIELD

The present invention relates to a solid-state battery.

BACKGROUND ART

In recent years, the demand for batteries (particularly, secondary batteries) has been greatly expanded as power sources for portable electronic devices such as mobile phones and portable personal computers. In secondary batteries for use in such applications, non-aqueous electrolytes (electrolytic solutions) such as an organic solvent have been conventionally used as media for moving ions. In such a non-aqueous electrolyte secondary battery, attempts have been made to improve battery characteristics such as average discharge potential and charging and discharging hysteresis by using $Li_4WO_5$ as a negative electrode active material (for example, Patent Document 1).

However, the battery having the above configuration has a risk of leaking of the electrolytic solution, and there is also a problem that an organic solvent or the like used for the electrolytic solution is a combustible substance. Thus, it has been proposed to use a solid-state electrolyte instead of the electrolytic solution. Development of a sintered-type solid-state secondary battery (so-called "solid-state battery") in which a solid-state electrolyte is used as an electrolyte and other constituent elements are also formed of a solid-state batteries has been advanced.

The solid-state battery includes a positive electrode layer, a negative electrode layer, and a solid-state electrolyte layer stacked between the positive electrode layer and the negative electrode layer. In such a solid-state battery, it has been reported that a solid-state electrolyte (for example, LLZ) having a garnet-type structure has relatively high ionic conductivity and a wide potential window (Non-Patent Document 1).

PRIOR ART DOCUMENTS

PATENT DOCUMENT

Patent Document 1: Japanese Patent Application Laid-Open No. 2016-201223

NON-PATENT DOCUMENT

Non-Patent Document 1: R. Murugan et al., Angew. Chem. Int. Ed., 2007, 46, 7778-7781

SUMMARY OF THE INVENTION

Problem to be solved by the invention

The inventor of the present invention has found that in the known solid-state battery as described above, the reactivity between a garnet-type solid-state electrolyte and an electrode active material is very high, and sufficient battery performance cannot be obtained.

Specifically, in the solid-state battery, when the garnet-type solid-state electrolyte was contained in a negative electrode layer together with a negative electrode active material, the garnet-type solid-state electrolyte reacted with the negative electrode active material at the time of sintering, and the utilization factor of the negative electrode active material was reduced. For this reason, a negative electrode active material having a sufficiently low reactivity with the garnet-type solid-state electrolyte at the time of sintering has been required.

An object of the present invention is to provide a solid-state battery capable of more sufficiently suppressing a decrease in utilization factor of a negative electrode active material although when a garnet-type solid-state electrolyte is contained in a negative electrode layer.

Means for solving the problem

The present invention relates to:

a solid-state battery including a positive electrode layer, a negative electrode layer, and a solid-state electrolyte layer disposed between the positive electrode layer and the negative electrode layer,
wherein the negative electrode layer includes a negative electrode active material containing Li (lithium), M [M is one or more elements selected from the group consisting of W (tungsten), Mo (molybdenum), Ta (tantalum), and Zr (zirconium)], and O (oxygen), and having a molar ratio (Li/M) of a Li content to a M content of more than 2.0, and a garnet-type solid-state electrolyte.

The present invention is based on the finding that a specific negative electrode active material is an electrode material that can be interrupted by co-sintering with a garnet-type solid-state electrolyte. Specifically, the inventors of the present invention have found that these reactions can be sufficiently suppressed by using a garnet-type solid-state electrolyte in combination with a specific negative electrode active material.

Advantageous effect of the invention

The solid-state battery according to the present invention can more sufficiently suppress the reaction between the garnet-type solid-state electrolyte and the negative electrode active material in the negative electrode layer.
In the solid-state battery of the present invention, although the negative electrode layer contains the garnet-type solid-state electrolyte, a decrease in the utilization factor of the negative electrode active material can be more sufficiently suppressed.

BRIEF EXPLANATION OF DRAWINGS

FIG. 1 illustrates an X-ray diffraction pattern (that is, an XRD pattern) measured in examples.
FIG. 2A illustrates a charging and discharging curve of a solid-state battery prepared in Example 4.
FIG. 2B illustrates a charging and discharging curve of a solid-state battery prepared in Comparative Example 2.

MODE FOR CARRYING OUT THE INVENTION

[Solid-state battery]

The present invention provides a solid-state battery. The "solid-state battery" in the present specification refers to a battery whose constituent elements (especially electrolyte layers) are formed of solids in a broad sense and refers to an "all-solid-state battery" whose constituent elements (especially all constituent elements) are formed of solids in a narrow sense. The "solid-state battery" in the present specification encompasses a so-called "secondary battery" that can be repeatedly charged and discharged and a "primary battery" that can only be discharged. The "solid-state battery" is preferably the "secondary battery". The "secondary battery" is not excessively limited by its name but may include, for example, an electrochemical device such as a "electric storage device".
The solid-state battery of the present invention includes a positive electrode layer, a negative electrode layer, and a solid-state electrolyte layer, and usually has a stacked structure of stacking a solid-state electrolyte layer disposed between the positive electrode layer and the negative electrode layer. Each of the positive electrode layer and the negative electrode layer may be stacked in two or more layers as long as a solid-state electrolyte layer is provided therebetween. The solid-state electrolyte layer in contact with the positive electrode layer and the negative electrode layer is sandwiched therebetween. The positive electrode layer and the solid-state electrolyte layer may be integrally sintered with each other as sintered bodies, and/or the negative electrode layer and the solid-state electrolyte layer may be integrally sintered with each other as sintered bodies. Being integrally sintered with each other as sintered bodies means that two or more members (in particular, layers) adjacent to or in contact with each other are joined by sintering. Here, the two or more members (in particular, layers) may be integrally sintered while they are sintered bodies. The solid-state battery of the present invention may be referred to as a "sintered solid-state battery" or a "co-sintered solid-state battery" in the sense that the positive electrode layer and the solid-state electrolyte layer have sintered bodies sintered integrally with each other, and the negative electrode layer and the solid-state electrolyte layer have sintered bodies sintered integrally with each other.

(Negative electrode layer)

The negative electrode layer is a layer capable of occluding and releasing metal ions, preferably a layer capable of occluding and releasing lithium ions. The negative electrode layer contains a negative electrode active material and a solid-state electrolyte.
The negative electrode active material contains Li (lithium), M [M is one or more elements selected from the group consisting of W (tungsten), Mo (molybdenum), Ta (tantalum), and Zr (zirconium)], and O (oxygen), and having a molar ratio (Li/M) of a Li content to a M content of more than 2.0. In a case where the negative electrode active material does not contain M, when Li/M in the negative electrode active material is 2.0 or less, the solid-state electrolyte reacts with the negative electrode active material at the time of sintering, and the utilization factor of the negative electrode active material decreases.

From the viewpoint of suppressing the reaction between the solid-state electrolyte and the negative electrode active material, the negative electrode active material preferably contains W as M described above. The present negative electrode active material exhibits charging and discharging capacity by redox of W. Including W as M means that, for example, in general formula (N) described later, $\beta$ related to W (that is, the number corresponding to $\beta$ related to W) satisfies $0 < \beta < 1.5$, preferably satisfies $0.4 \leq \beta \leq 1.2$, more preferably $0.6 \leq \beta \leq 1.02$, and still more preferably $0.7 \leq \beta \leq 1.02$. M is more preferably W from the viewpoint of further suppressing the reaction between the solid-state electrolyte and the negative electrode active material.

The negative electrode active material preferably has a chemical composition represented by the general formula (N) from the viewpoint of suppressing the reaction between the solid-state electrolyte and the negative electrode active material.

[Chemical Formula 1]

$$Li_{\alpha}M_{\beta}M'_{\gamma}O_{\omega} \qquad (N)$$

In the formula (N), M is the same as M described above. M preferably contains W, and more preferably contains W, from the viewpoint of further suppressing the reaction between the solid-state electrolyte and the negative electrode active material. When M contains W (tungsten), M may contain W (tungsten) and one or more elements Mx selected from the group consisting of Mo (molybdenum), Ta (tantalum), and Zr (zirconium) in combination.

M' is one or more elements selected from the group consisting of Na (sodium), K (potassium), Ca (calcium), Ti (titanium), V (vanadium), Sn (tin), Nb (niobium), Zn (zinc), Mn (manganese), Mg (magnesium), Al (aluminum), and Ga (gallium). In addition, M' may be a metal element that can be substituted with some Li elements.

$\alpha$ satisfies $2 < \alpha < 10$, and from the viewpoint of further suppressing the reaction between the solid-state electrolyte and the negative electrode active material, preferably $3 \leq \alpha \leq 8$, more preferably $3 \leq \alpha \leq 5.5$, still more preferably $3.9 \leq \alpha \leq 5.5$, particularly preferably $3.9 \leq \alpha \leq 5.0$, and most preferably $3.9 \leq \alpha \leq 4.5$.

$\beta$ satisfies $0 < \beta < 1.5$, and from the viewpoint of further suppressing the reaction between the solid-state electrolyte and the negative electrode active material, preferably $0.4 \leq \beta \leq 1.2$, more preferably $0.6 \leq \beta \leq 1.05$, still more preferably $0.7 \leq \beta \leq 1.02$, particularly preferably $0.9 \leq \beta \leq 1.03$, and most preferably 1. When M contains two or more elements, the total number of $\beta$ related to each element (that is, the number corresponding to $\beta$ related to each element) may be within the range of $\beta$. When M contains two or more kinds of elements, $\beta$ related to each element (that is, the number corresponding to $\beta$ related to each element) may be independently 0.01 or more and 1.2 or less, and particularly 0.05 or more and 1.05 or less. In particular, when M contains W (tungsten) and one or more elements Mx selected from the group consisting of Mo (molybdenum), Ta (tantalum), and Zr (zirconium) in combination, $\beta$ (hereinafter, referred to as $\beta_W$) related to W and $\beta$ (hereinafter, referred to as $\beta_{Mx}$) related to Mx are preferably within the following ranges from the viewpoint of further suppressing the reaction between the solid-state electrolyte and the negative electrode active material:

· $\beta_W$ is 0.5 or more and 1.1 or less, particularly 0.7 or more and 1.0 or less.;
· $\beta_{Mx}$ is 0.05 or more and 0.4 or less, particularly 0.1 or more and 0.3 or less; when Mx contains two or more elements, the total number of $\beta_{Mx}$ related to each element (that is, the number corresponding to $\beta_{Mx}$ related to each element) may be within the range of $\beta_{Mx}$.

$\gamma$ satisfies $0 \leq \gamma < 3$, and from the viewpoint of further suppressing the reaction between the solid-state electrolyte and the negative electrode active material, preferably $0 \leq \gamma \leq 2$, more preferably $0 \leq \gamma \leq 1$, still more preferably $0 \leq \gamma \leq 0.4$, and particularly preferably 0. When M' contains two or more elements, the total number of $\gamma$ related to each element (that is, the number corresponding to $\gamma$ related to each element) may be within the range of $\gamma$.

$\omega$ satisfies $4 < \omega < 9$, and from the viewpoint of further suppressing the reaction between the solid-state electrolyte and the negative electrode active material, preferably satisfies $4 < \omega \leq 7$ (particularly 5, 6, or 7), more preferably $4.5 \leq \omega \leq 6.5$ (particularly 5 or 6), still more preferably $4.5 \leq \omega \leq 5.5$, and still more preferably 5.

$\alpha/\beta$ is a value corresponding to the molar ratio (Li/M) of the content of Li to the content of M described above, and is more than 2, and from the viewpoint of further suppressing the reaction between the solid-state electrolyte and the negative electrode active material, preferably $2 < \alpha/\beta \leq 7$, more preferably $3 \leq \alpha/\beta \leq 6.5$, still more preferably $3.8 \leq \alpha/\beta \leq 6.5$, particularly preferably $3.8 \leq \alpha/\beta \leq 5.5$, and most preferably $3.8 \leq \alpha/\beta \leq 5.0$.

The chemical composition of the negative electrode active material may be an average chemical composition. The average chemical composition of the negative electrode active material may be directly measured by breaking the solid-state battery and using TEM-EELS (electron energy loss spectroscopy), Auger electron spectroscopy, or the like.

In the negative electrode layer, the average chemical composition of the negative electrode active material and the average chemical composition of the solid-state electrolyte described later can be distinguished and then measured depending on the compositions thereof in the composition analysis mentioned above. For example, when the solid-state electrolyte contains La and the electrode active material does not contain La, a site where La is not detected is regarded as a negative electrode active material, and a site where La is detected is regarded as a solid-state electrolyte).

Specific examples of the negative electrode active material represented by the general formula (N) include $Li_4WO_5$, $Li_{3.8}W_{1.03}O_5$, $Li_6WO_6$, $Li_4(W_{0.8}Mo_{0.2})O_5$, $Li_{4.4}(W_{0.8}Zr_{0.2})O_5$, $Li_{4.1}(W_{0.9}Ta_{0.1})O_5$, $Li_{4.23}W_{0.96}O_5$, and $Li_{3.84}Mg_{0.2}W_{0.96}O_5$.

From the viewpoint of further suppressing the reaction between the solid-state electrolyte and the negative electrode active material, the negative electrode active material preferably has one or more crystal structures selected from the group consisting of a low-temperature phase $Li_4WO_5$-type crystal structure, a high-temperature phase $Li_4WO_5$-type crystal structure, and a $Li_6WO_6$-type crystal structure, more preferably has a low-temperature phase $Li_4WO_5$-type crystal structure or a high-temperature phase $Li_4WO_5$-type crystal structure, and still more preferably has a high-temperature phase $Li_4WO_5$-type crystal structure.

In the present invention, the negative electrode active material having a low-temperature phase $Li_4WO_5$-type structure means that the negative electrode active material has a crystal structure attributable to ICDD Card No. 01-074-6445. For example, the negative electrode active material having a low-temperature phase $Li_4WO_5$-type structure means that the negative electrode active material (in particular, particles thereof) exhibits, at a predetermined incident angle, one or more main peaks corresponding to a Miller index that is unique to a so-called low-temperature $Li_4WO_5$ type crystal structure in X-ray diffraction. The low-temperature phase $Li_4WO_5$-type structure is a so-called $\alpha$-$Li_4WO_5$-type structure.

In the present invention, the negative electrode active material having a high-temperature phase $Li_4WO_5$-type structure means that the negative electrode active material has a crystal structure attributable to any of ICDD Card No. 01-074-6193, 00-021-0530, or 04-010-6772. For example, the negative electrode active material having a high-temperature phase $Li_4WO_5$-type structure means that the negative electrode active material (in particular, particles thereof) exhibits, at a predetermined incident angle, one or more main peaks corresponding to a Miller index that is unique to a so-called high-temperature $Li_4WO_5$ type crystal structure in X-ray diffraction. The high-temperature phase $Li_4WO_5$-type structure includes a so-called $\beta$-$Li_4WO_5$-type structure and a similar structure thereof. Examples of the similar structure include a crystal structure attributable to either ICDD Card No. 00-021-0530 or 04-010 -6772 among the above crystal structures.

In the present invention, the negative electrode active material having a $Li_6WO_6$-type structure means that the negative electrode active material has a crystal structure attributable to ICDD Card No.01-073-6224. For example, the negative electrode active material having a $Li_6WO_6$-type structure means that the negative electrode active material (in particular, particles thereof) exhibits, at a predetermined incident angle, one or more main peaks corresponding to a Miller index that is unique to a so-called $Li_6WO_6$ type crystal structure in X-ray diffraction.

The lattice constant of the negative electrode active material in the present invention is changed by charging and discharging (Li insertion/removal insertion). Therefore, it is not always necessary to have a lattice constant strictly equal to that of the ICDD card, and it is sufficient to have a lattice constant approximate to that of the ICDD card. The approximation referred to in the present invention indicates a numerical range within $\pm$ 10% with respect to the lattice constant of the ICDD card.

The negative electrode active material preferably has a single-phase structure of a high-temperature phase $Li_4WO_5$-type crystal structure from the viewpoint of further suppressing the reaction between the solid-state electrolyte and the negative electrode active material. The single-phase structure of the high-temperature phase $Li_4WO_5$-type crystal structure is a crystal structure in which, regarding the intensity of the strongest peak inherent to each crystal structure in X-ray diffraction (XRD using CuK$\alpha$ rays), the intensity $I_H$ of the strongest peak inherent to the high-temperature phase $Li_4WO_5$-type crystal structure (peak in the vicinity of an incident angle $2\theta = 18°$) is 80% or more with respect to the sum of the intensities of all the strongest peaks. For example, the single-phase structure of the high-temperature phase $Li_4WO_5$-type crystal structure is a crystal structure in which the intensity $I_H$ of the strongest peak inherent to the high-temperature phase $Li_4WO_5$-type crystal structure (peak in the vicinity of the incident angle $2\theta = 18°$) and the intensity $I_L$ of the strongest peak inherent to the low-temperature phase $Li_4WO_5$-type crystal structure (for example, a peak at an incident angle $2\theta$ of about 44°) have a relationship of $I_H/(I_H + I_L) \geq 0.80$ as compared with a mixedphase structure of the high-temperature phase $Li_4WO_5$-type crystal structure and the low-temperature phase $Li_4WO_5$-type crystal structure in X-ray diffraction (XRD using CuK$\alpha$ rays). On the other hand, a crystal structure in which $I_H$ and $I_L$ have a relationship of $I_H/(I_H + I_L) < 0.80$ is determined to be a mixed phase.

The negative electrode active material may have the chemical composition and crystal structure described above in the solid-state battery after sintering the negative electrode layer together with the positive electrode layer and the solid-state electrolyte layer.

The negative electrode active material can be produced, for example, by the following method. First, a raw material compound containing a predetermined metal atom is weighed so as to provide a predetermined chemical composition, and water is added thereto and mixed therewith to obtain a slurry. The slurry is dried, subjected to calcination at 700°C or higher and 1000°C or lower for 4 hours or more and 24 hours or less, and subjected to pulverizing, thereby allowing a negative electrode active material to be obtained.

The average particle diameter of the negative electrode active material is not particularly limited, may be, for example, 0.01 um or more and 20 um or less, and is preferably 0.1 um or more and 5 um or less.

As the average particle diameter of the negative electrode active material, for example, 10 or more and 100 or less particles are randomly selected from an SEM image, and their particle diameters are simply averaged to determine the average particle diameter (arithmetic average) .

The particle diameter is the diameter of a spherical particle when the particle is assumed to be a perfect sphere. For such a particle diameter, for example, a section of the solid-state battery is cut out, a sectional SEM image is photographed using an SEM, the sectional area S of the particle is calculated using image analysis software (for example, "Azo-kun" (manufactured by Asahi Kasei Engineering Corporation)), and then the particle diameter R may be determined by the following formula.

[Mathematical Formula 1]

$$R = 2 \times (S/\pi)^{1/2}$$

It is to be noted that the average particle diameter of the negative electrode active material in the negative electrode layer can be measured by specifying the negative electrode active material depending on the composition, at the time of measuring the chemical composition mentioned above.

The volume percentage of the negative electrode active material in the negative electrode layer is not particularly limited, and is preferably 20% or more and 80% or less, more preferably 30% or more and 75% or less, and still more preferably 30% or more and 60% or less, from the viewpoint of further improving the utilization factor of the negative electrode active material.

The volume percentage of the negative electrode active material in the negative electrode layer can be measured from an SEM image after FIB sectional processing. Particularly, the cross section of the negative electrode layer is observed with the use of SEM-EDX. Elements contained only in the solid-state electrolyte are detected, and a site where the elements are not detected can be regarded as a negative electrode active material. For example, when the solid-state electrolyte contains La and the electrode active material does not contain La, it is determined that a site where W is detected from EDX and La is not detected is the negative electrode active material, and an area ratio of the site is calculated, whereby the volume percentage of the negative electrode active material can be measured.

The particle shape of the negative electrode active material in the negative electrode layer is not particularly limited, and may be, for example, any of a spherical shape, a flattened shape, and an indefinite shape.

The solid-state electrolyte contained in the negative electrode layer is a solid-state electrolyte having a garnet-type structure. When the negative electrode layer contains another solid-state electrolyte (for example, NaSICON-type solid-state electrolyte) instead of the garnet-type solid-state electrolyte, the solid-state electrolyte reacts with the negative electrode active material at the time of sintering, and the utilization factor of the negative electrode active material decreases.

The fact that the solid-state electrolyte has a garnet-type structure means that the solid-state electrolyte has a crystal structure, and in a broad sense, refers to the fact that the negative electrode active material has a crystal structure that can be identified as a garnet-type crystal structure by those skilled in the field of the solid-state battery. In a narrow sense, the fact that the solid-state electrolyte has a garnet-type structure means that the solid-state electrolyte exhibits, at a predetermined incident angle, one or more main peaks corresponding to a Miller index that is unique to a so-called garnet-type crystal structure in X-ray diffraction.

The garnet-type solid-state electrolyte is not particularly limited as long as it has a garnet-type crystal structure. From the viewpoint of further suppressing the reaction between the solid-state electrolyte and the negative electrode active material, the garnet-type solid-state electrolyte preferably contains Li (lithium), La (lanthanum), Zr (zirconium), and O (oxygen), and more preferably further contains W.

The garnet-type solid-state electrolyte is a compound represented by the general formula (G):
[Chemical Formula 2]

$$Li_{\alpha}A_xB^I_{\beta-y}B^{II}_yD^I_{\gamma-z}D^{II}_zO_{\omega} \qquad (G)$$

In the formula (G), A is one or more elements that can be made into a solid solution in the Li site of an oxide having a garnet-type crystal structure. Specifically, A is one or more elements selected from the group consisting of gallium (Ga), aluminum (Al), magnesium (Mg), zinc (Zn), and scandium (Sc), From the viewpoint of further suppressing the reaction between the solid-state electrolyte and the negative electrode active material, A is preferably one or more elements selected from the group consisting of Ga (gallium), Al (aluminum), and Sc (scandium) or absent (that is, x = 0), more preferably Ga is contained or absent (that is, x = 0), and still more preferably absent (that is, x = 0). When A contains Ga, A may contain Ga and one or more elements Ax selected from the group consisting of Al, Mg, Zn, and Sc (particularly, the group consisting of Al and Sc) in combination.

$B^I$ is one or more elements selected from the group consisting of elements capable of having tervalent valency among elements belonging to Groups 1 to 3 capable of having eight-coordination with oxygen. $B^I$ is specifically one or more elements selected from the group consisting of La (lanthanum), Y (yttrium), Pr (praseodymium), Nd (neodymium), Pm (promethium), Sm (samarium), Eu (europium), Gd (gadolinium), Tb (terbium), Dy (dysprosium), Ho (holmium), Er (erbium), Tm (thulium), Yb (ytterbium), and Lu (lutetium). $B^I$ preferably contains La (lanthanum) from the viewpoint of further suppressing the side reaction during firing and the decrease in ionic conductivity of the garnet-type oxide, and from the viewpoint of further suppressing the reaction between the solid-state electrolyte and the negative electrode active material. From the same viewpoint, $B^I$ more preferably contains La (lanthanum).

$B^{II}$ is one or more elements selected from the group consisting of elements capable of having valences other than tervalent valency among elements belonging to Groups 1 to 3 capable of having eight-coordination with oxygen. $B^{II}$ is specifically one or more elements selected from the group consisting of Ca (calcium), Sr (strontium), and Ba (barium) as bivalent $B^{II}$, and Ce (cerium) as tetravalent $B^{II}$. $B^{II}$ is preferably absent (that is, y = 0) from the viewpoint of further suppressing the reaction between the solid-state electrolyte and the negative electrode active material.

$D^I$ is one or more elements selected from the group consisting of elements capable of having tetravalent valency among transition elements and typical elements belonging to Groups 12 to 15 capable of having six-coordination with oxygen. $D^I$ is specifically one or more elements selected from the group consisting of Zr (zirconium), Ti (titanium), Hf (hafnium, Ge (germanium), and Sn (tin). $D^I$ preferably contains Zr (zirconium) from the viewpoint of further suppressing the side reaction during firing and the decrease in ionic conductivity of the garnet-type oxide, and from the viewpoint of further suppressing the reaction between the solid-state electrolyte and the negative electrode active material. $D^I$ more preferably contains Zr (zirconium) from the same viewpoint.

$D^{II}$ is one or more elements selected from the group consisting of elements capable of having valences other than tetravalent valency among transition elements and typical elements belonging to Groups 12 to 15 capable of having six-coordination with oxygen. $D^{II}$ is specifically one or more elements selected from the group consisting of Sc (scandium) as trivalent $D^{II}$, Ta (tantalum), Nb (niobium), Sb (antimony), and Bi (bismuth) as pentavalent $D^{II}$, and Mo (molybdenum), W (tungsten), and Te (tellurium) as hexavalent $D^{II}$. From the viewpoint of further suppressing the reaction between the solid-state electrolyte and the negative electrode active material, $D^{II}$ is preferably one or more elements selected from the group consisting of Nb (niobium), Ta (tantalum), W (tungsten), and Bi (bismuth) or no element (that is, z = 0). From the same viewpoint, $D^{II}$ more preferably contains W (tungsten), and still more preferably contains Ta (tantalum) and W (tungsten).

In Formula (G), $\alpha$ satisfies $3.0 \leq \alpha \leq 8.0$, and from the viewpoint of further suppressing the reaction between the solid-state electrolyte and the negative electrode active material, $\alpha$ preferably satisfies $5.5 \leq \alpha \leq 7.0$, more preferably $6.0 \leq \alpha \leq 6.8$, still more preferably $6.2 \leq \alpha \leq 6.8$, and particularly preferably $6.2 \leq \alpha \leq 6.7$.

$\beta$ satisfies $2.5 \leq \beta \leq 3.5$, and from the viewpoint of further suppressing the reaction between the solid-state electrolyte and the negative electrode active material, preferably $2.6 \leq \beta \leq 3.4$, more preferably $2.7 \leq \beta \leq 3.3$, still more preferably $2.8 \leq \beta \leq 3.2$, particularly preferably $2.9 \leq \beta \leq 3.1$, and most preferably 3.0. When $B^I$ contains two or more kinds of elements, "$\beta$-y" is the total number of numbers related to each element.

$\gamma$ satisfies $1.5 \leq \gamma \leq 2.5$, and from the viewpoint of further suppressing the reaction between the solid-state electrolyte and the negative electrode active material, preferably $1.6 \leq \gamma \leq 2.4$, more preferably $1.7 \leq \gamma \leq 2.3$, still more preferably $1.8 \leq \gamma \leq 2.2$, particularly preferably $1.9 \leq \gamma \leq 2.1$, and most preferably 2.0. When $D^I$ contains two or more kinds of elements, "$\gamma$-z" is the total number of numbers related to each element. "$\gamma$-z" is usually 1.0 or more and 2.5 or less, and is preferably 1.2 or more and 2.2 or less, and more preferably 1.3 or more and 1.7 or less from the viewpoint of further suppressing the reaction between the solid-state electrolyte and the negative electrode active material.

$\omega$ satisfies $11 \leq \omega \leq 13$, preferably $11 \leq \omega \leq 12.5$, more preferably $11.5 \leq \omega \leq 12.5$, and still more preferably "12-$\delta$", from the viewpoint of further suppressing the reaction between the solid-state electrolyte and the negative electrode active material. $\delta$ represents an oxygen deficiency amount and may be 0. $\delta$ may usually satisfy $0 \leq \delta < 1$. The oxygen deficiency amount $\delta$ cannot be quantitatively analyzed with the latest device, and thus may be considered to be 0.

x satisfies $0 \leq x \leq 1.0$, and from the viewpoint of further suppressing the reaction between the solid-state electrolyte and the negative electrode active material, preferably $0 \leq x \leq 0.8$, more preferably $0 \leq x \leq 0.6$, still more preferably $0 \leq x \leq 0.4$, particularly preferably $0 \leq x \leq 0.2$, and most preferably 0. When A contains two or more elements, the total number of x related to each element (that is, the number corresponding to x related to each element) may be within the range of x. When A contains two or more kinds of elements, x related to each element (that is, the number corresponding to x related to each element) may be independently 0.01 or more and 0.5 or less, and particularly 0.03 or more and 0.18 or less. In particular, when A contains Ga and one or more elements Ax selected from the group consisting of Al, Mg, Zn, and Sc (particularly, the group consisting of Al and Sc) in combination, x (hereinafter, referred to as $x_{Ga}$) related to Ga and x (hereinafter, referred to as $x_{Ax}$) related to Ax are preferably within the following ranges from the viewpoint of further suppressing the reaction between the solid-state electrolyte and the negative electrode active material:

· $x_{Ga}$ is 0.01 or more and 0.3 or less, particularly 0.03 or more and 0.18 or less;
· $x_{Ax}$ is 0.01 or more and 0.3 or less, particularly 0.03 or more and 0.18 or less; when Ax contains two or more elements, the total number of $x_{Ax}$ related to each element (that is, the number corresponding to $x_{Ax}$ related to each element) may be within the range of $x_{Ax}$.

y is a value smaller than β, usually satisfies $0 \le y \le 1.0$, and from the viewpoint of further suppressing the reaction between the solid-state electrolyte and the negative electrode active material, preferably $0 \le y \le 0.8$, more preferably $0 \le y \le 0.6$, still more preferably $0 \le y \le 0.4$, particularly preferably $0 \le y \le 0.2$, and most preferably 0. When $B^{II}$ contains two or more elements, the total number of y related to each element (that is, the number corresponding to y related to each element) may be within the range of y.

z is a value of γ or less, and usually satisfies $0 \le z \le 2.2$, and from the viewpoint of further suppressing the reaction between the solid-state electrolyte and the negative electrode active material, preferably $0 \le z \le 2.0$, more preferably $0 \le z \le 1.0$, still more preferably $0.2 \le z \le 0.8$, and particularly preferably $0.3 \le z \le 0.6$. When $D^{II}$ contains two or more elements, the total number of z related to each element (that is, the number corresponding to z related to each element) may be within the range of z. When $D^{II}$ contains two or more kinds of elements, z related to each element (that is, the number corresponding to z related to each element) may be independently 0.01 or more and 1.0 or less, and particularly 0.05 or more and 0.5 or less. Particularly when $D^{II}$ contains Ta and W, z (hereinafter, referred to as $z_{Ta}$) related to Ta and z (hereinafter, referred to as $z_w$) related to W are preferably within the following ranges from the viewpoint of further suppressing the reaction between the solid-state electrolyte and the negative electrode active material:

· $z_{Ta}$ is 0.1 or more and 1.0 or less, particularly 0.2 or more and 0.6 or less;
· $z_W$ is 0.01 or more and 0.5 or less, particularly 0.08 or more and 0.2 or less.

Specific examples of the garnet-type solid-state electrolyte represented by general formula (G) include $Li_{6.6}La_3(Zr_{1.6}Ta_{0.4})O_{12}$, $(Li_{6.4}Ga_{0.05}Al_{0.15})La_3Zr_2O_{12}$, $(Li_{6.4}Al_{0.2})La_3Zr_2O_{12}$, $(Li_{6.4}Ga_{0.15}Sc_{0.05})La_3Zr_2O_{12}$, $Li_{6.75}La_3(Zr_{1.75}Nb_{0.25})O_{12}$, $Li_{6.4}La_3(Zr_{1.5}Ta_{0.4}W_{0.1})O_{12}$, $Li_{6.3}La_3(Zr_{1.45}Ta_{0.4}W_{0.15})O_{12}$, and $Li_{6.53}La_3(Zr_{1.53}Ta_{0.4}Bi_{0.07})O_{12}$.

The chemical composition of the solid-state electrolyte may be an average chemical composition. The average chemical composition of the solid-state electrolyte (in particular, the solid-state electrolyte that has a garnet-type structure) in the negative electrode layer means the average value for the chemical composition of the solid-state electrolyte in the thickness direction of the negative electrode layer. The average chemical composition of the solid-state electrolyte can be analyzed and measured by breaking the solid-state battery and performing composition analysis by energy-dispersive X-ray spectroscopy (EDX) using SEM-EDX in a field of view in which the entire negative electrode layer fits in the thickness direction.

In the negative electrode layer, the average chemical composition of the negative electrode active material and the average chemical composition of the solid-state electrolyte can be distinguished and then measured depending on the compositions thereof in the composition analysis mentioned above.

The solid-state electrolyte of the negative electrode layer may be obtained by the same method as in the case of the negative electrode active material except that a raw material compound containing a predetermined metal atom is used, or may be obtained as a commercially available product.

The chemical composition and crystal structure of the solid-state electrolyte in the negative electrode layer are typically hardly changed by sintering as well. The solid-state electrolyte preferably has the average chemical composition and the crystal structure described above in the solid-state battery after sintering the negative electrode layer together with the positive electrode layer and the solid-state electrolyte layer.

The volume percentage of the solid-state electrolyte having a garnet-type structure in the negative electrode layer is not particularly limited, and is preferably 10% or more and 50% or less, more preferably 20% or more and 40% or less, from the viewpoint of the balance between further improved utilization factor of the negative electrode active material and the increased energy density of the solid-state battery.

The volume percentage of the garnet-type solid-state electrolyte in the negative electrode layer can be measured in the same manner as the volume percentage of the negative electrode active material. The garnet-type solid-state electrolyte can be determined by detecting elements contained in the garnet-type solid-state electrolyte by EDX or the like. For example, in a case where Zr and La are contained in the solid-state electrolyte, the garnet-type solid-state electrolyte is based on a site where Zr and/or La is detected by EDX.

The present invention does not prevent the negative electrode layer from containing a solid-state electrolyte other than the garnet-type solid-state electrolyte as the solid-state electrolyte. From the viewpoint of further suppressing the reaction between the solid-state electrolyte and the negative electrode active material, it is preferable that the present invention does not contain another solid-state electrolyte.

In the present invention, since the negative electrode layer contains the above-described negative electrode active material and the above-described garnet-type solid-state electrolyte in combination, the reaction between the negative electrode active material and the garnet-type solid-state electrolyte can be sufficiently suppressed, and as a result, a decrease in the utilization factor of the negative electrode active material can be sufficiently suppressed.

From the viewpoint of further suppressing the reaction between the solid-state electrolyte and the negative electrode active material, in each of a more preferred aspect A, a further preferred aspect B and a most preferred aspect C, the negative electrode layer contains the following negative electrode active material and garnet-type solid-state electrolyte in combination:

· Embodiment A

Negative electrode active material A:

Among the negative electrode active materials described above, a negative electrode active material having a chemical composition represented by the same general formula as the general formula (N) and having a single-phase structure of a high-temperature phase $Li_4WO_5$-type structure.

In other words, the negative electrode active material A may be a negative electrode active material having a chemical composition represented by the general formula (N) and having a single-phase structure of a high-temperature phase $Li_4WO_5$-type crystal structure.

Garnet-type solid-state electrolyte A:

A garnet-type solid-state electrolyte having a chemical composition represented by the general formula (G).

· Embodiment B

Negative electrode active material B:

Among the negative electrode active materials described above, a negative electrode active material having the following chemical composition and having a single-phase structure of a high-temperature phase $Li_4WO_5$-type structure:

Chemical composition = Chemical composition represented by the same general formula as the general formula (N) except that $\alpha/\beta$ satisfies $3.8 \leq \alpha/\beta \leq 6.5$ and M is W.

In other words, the negative electrode active material B is a negative electrode active material in which $\alpha/\beta$ satisfies $3.8 \leq \alpha/\beta \leq 6.5$ and M is W in the general formula (N), and may be a negative electrode active material having a single-phase structure of a high-temperature phase $Li_4WO_5$-type crystal structure.

Garnet-type solid-state electrolyte B:

Among the garnet-type solid-state electrolytes described above, a garnet-type solid-state electrolyte having the following chemical composition:

Chemical composition represented by the same general formula as the general formula (G) described above except that Chemical composition = Condition (s1) is satisfied:

Condition (s1): A contains Ga or is absent (that is, x = 0). For example, x = 0 or the A may contain Ga and $0 < x \leq 1.0$ may be satisfied.

In other words, the garnet-type solid-state electrolyte B may be a garnet-type solid-state electrolyte satisfying the condition (s1) in the general formula (G).

· Embodiment C

Negative electrode active material C:

Among the negative electrode active materials described above, a negative electrode active material having the following chemical composition and having a single-phase structure of a high-temperature phase $Li_4WO_5$-type structure:

Chemical composition = Chemical composition represented by the same general formula as the general formula (N) except that $\alpha/\beta$ satisfies $3.8 \leq \alpha/\beta \leq 6.5$ and M is W.

In other words, the negative electrode active material C is a negative electrode active material in which $\alpha/\beta$ satisfies $3.8 \leq \alpha/\beta \leq 6.5$ and M is W in the general formula (N), and may be a negative electrode active material having a single-phase structure of a high-temperature phase $Li_4WO_5$-type crystal structure.

Garnet-type solid-state electrolyte C:

Among the garnet-type solid-state electrolytes described above, a garnet-type solid-state electrolyte having the following chemical composition.

Chemical composition represented by the same general formula as the general formula (G) described above except that Chemical composition = Condition (s1) and Condition (s2) is satisfied:

Condition (s1): A contains Ga or is absent (that is, x = 0); for example, x = 0 or the A may contain Ga and $0 < x \leq 1.0$ may be satisfied.

Condition (s2): $D^{II}$ includes Ta (tantalum) and W (tungsten).

In other words, the garnet-type solid-state electrolyte C may be a garnet-type solid-state electrolyte satisfying the conditions (s1) and (s2) in the general formula (G).

The negative electrode layer may further contain a sintering auxiliary agent and/or a conductive auxiliary agent.

The negative electrode layer contains a sintering auxiliary agent, thereby allowing densification also at the time of sintering at a lower temperature, and allowing the suppression of element diffusion at the interface between the negative electrode active material and the solid-state electrolyte layer. For the sintering auxiliary agent, sintering auxiliary agents known in the field of the solid-state battery can be used. It is preferable that the composition of the sintering auxiliary agent contain at least lithium (Li), boron (B), and oxygen (O), and the molar ratio of Li to B (Li/B) is 2.0 or more as a result of studies by the inventors from the viewpoint of further improving the utilization factor of the negative electrode active material. These sintering auxiliary agents have a low-melting point, and promoting liquid-phase sintering allows the negative electrode layer to be densified at a lower temperature. In addition, the above-mentioned composition is employed, thereby allowing for further inhibiting the side reaction between the sintering auxiliary agent and the garnet-type solid-state electrolyte at the time of sintering. Examples of the sintering auxiliary agents that satisfy these conditions include $Li_3BO_3$, $(Li_{2.7}Al_{0.3})BO_3$, $Li_{2.4}Al_{0.2}BO_3$, and $Li_{2.8}(B_{0.8}C_{0.2})O_3$. Among them, it is particularly preferable to use $Li_{2.4}Al_{0.2}BO_3$ having a particularly high ionic conductivity.

The volume percentage of the sintering auxiliary agent in the negative electrode layer is not particularly limited, and is preferably 0.1% or more and 10% or less, more preferably 1% or more and 7% or less, from the viewpoint of the balance between further improved utilization factor of the negative electrode active material and the increased energy density of the solid-state battery.

The volume percentage of the sintering auxiliary agent in the negative electrode layer can be measured in the same manner as the volume percentage of the negative electrode active material. When the above sintering auxiliary agent is used, B (boron) can be detected by EDX and determined as a region of the sintering auxiliary agent.

As the conductive auxiliary agent in the negative electrode layer, a conductive auxiliary agent known in the field of the solid-state battery can be used. Examples of the conductive auxiliary agent preferably used from the viewpoint of further improving ion conductivity and further inhibiting Li dendrite growth include metal materials such as silver (Ag), gold (Au), palladium (Pd), platinum (Pt), copper (Cu), tin (Sn), and nickel (Ni); and carbon materials such as carbon nanotubes for example acetylene black, Ketjen black, Super P (registered trademark), and VGCF (registered trademark). The shape of the carbon material is not particularly limited, and any shape such as a spherical shape, a plate shape, and a fibrous shape may be used.

The volume percentage of the conductive auxiliary agent in the negative electrode layer is not particularly limited, and is preferably 10% or more and 50% or less, more preferably 20% or more and 40% or less, from the viewpoint of further improving the utilization factor of the active material.

The thickness of the negative electrode layer is usually 2 to 100 um, and is preferably 1 to 30 um from the viewpoint of further improving the utilization factor of the active material. As the thickness of the negative electrode layer, an average value of thicknesses measured at any ten points in an SEM image is used.

In the negative electrode layer, the porosity is not particularly limited, and is preferably 20% or less, more preferably 15% or less, still more preferably 10% or less from the viewpoint of further improving the utilization factor of the active material.

For the porosity of the negative electrode layer, a value measured from an SEM image after FIB sectional processing is used.

In the negative electrode layer, both the negative electrode active material and the solid-state electrolyte (and a conductive auxiliary agent and a sintering auxiliary agent which are optionally contained) may have the form of a sintered body. For example, when the negative electrode layer contains a negative electrode active material, a solid-state electrolyte, a conductive auxiliary agent, and a sintering auxiliary agent, the negative electrode layer may have a form of a sintered body in which the negative electrode active material particles, the solid-state electrolyte, the conductive auxiliary agent, and the sintering auxiliary agent are bonded to each other by sintering while the negative electrode active material particles, the solid-state electrolyte, the conductive auxiliary agent, and the sintering auxiliary agent are bonded to each other by sintering.

(Positive electrode layer)

In the present invention, the positive electrode layer is not particularly limited. For example, the positive electrode layer contains a positive electrode active material. The positive electrode layer may have a form of a sintered body containing positive electrode active material particles.

The positive electrode layer is a layer capable of occluding and releasing metal ions, preferably a layer capable of occluding and releasing lithium ions. The positive electrode active material is not particularly limited, and positive electrode active materials known in the field of the solid-state battery can be used. Examples of the positive electrode active material include lithium-containing phosphate compound particles that have a NASICON-type structure, lithium-containing phosphate compound particles that have an olivine-type structure, lithium-containing layered oxide particles, lithium-containing oxide particles that have a spinel-type structure. Specific examples of the preferably used lithium-containing phosphate compounds that have a NASICON-type structure include $Li_3V_2(PO_4)_3$. Specific examples of the preferably used lithium-containing phosphate compound which has an olivine-type structure include $LiFePO_4$ and $LiMnPO_4$. Specific examples of the preferably used lithium-containing layered oxide grains include $LiCoO_2$ and $LiCo_{1/3}Ni_{1/3}Mn_{1/3}O_2$. Specific examples of the preferably used lithium-containing oxides that have a spinel-type structure include $LiMn_2O_4$, $LiNi_{0.5}Mn_{1.5}O_4$, and $Li_4Ti_5O_{12}$. As the positive electrode active material, a lithium-containing layered oxide such as $LiCoO_2$ and $LiCo_{1/3}Ni_{1/3}Mn_{1/3}O_2$ is more preferably used. It is to be noted that only one of these positive electrode active material particles may be used, or two or more thereof may be used in mixture.

The fact that the positive electrode active material has a NASICON-type structure in the positive electrode layer means that the positive electrode active material (in particular, particles thereof has a NASICON-type crystal structure, and in a broad sense, refers to the fact that the negative electrode active material has a crystal structure that can be identified as a NASICON-type crystal structure by those skilled in the field of the solid-state battery. In a narrow sense, the fact that the positive electrode active material has a NASICON-type structure in the positive electrode layer means that the positive electrode active material (in particular, particles thereof) exhibits, at a predetermined incident angle, one or more main peaks corresponding to Miller indices that are unique to a so-called NASICON-type crystal structure in X-ray diffraction. Examples of the preferably used positive electrode active material that has a NASICON-type structure include the compounds exemplified above.

The fact that the positive electrode active material has an olivine-type structure in the positive electrode layer means that the positive electrode active material (in particular, particles thereof) has an olivine-type crystal structure, and in a broad sense, refers to the fact that the negative electrode active material has a crystal structure that can be identified as an olivine-type crystal structure by those skilled in the field of the solid-state battery. In a narrow sense, the fact that the positive electrode active material has an olivine-type structure in the positive electrode layer means that the positive electrode active material (in particular, particles thereof) exhibits, at a predetermined incident angle, one or more main peaks corresponding to Miller indices that are unique to a so-called olivine-type crystal structure in X-ray diffraction. Examples of the preferably used positive electrode active material that has an olivine-type structure include the compounds exemplified above.

The positive electrode active material having a spinel-type structure in the positive electrode layer means that the positive electrode active material (in particular, particles thereof) has a spinel-type crystal structure, and in a broad sense, it means that the positive electrode active material has a crystal structure that may be recognized as a spinel-type crystal structure by those skilled in the art of the solid-state battery. In a narrow sense, the fact that the positive electrode active material has a spinel-type structure in the positive electrode layer means that the positive electrode active material (in particular, particles thereof) exhibits, at a predetermined incident angle, one or more main peaks corresponding to Miller indices that are unique to a so-called spinel-type crystal structure in X-ray diffraction. Examples of the preferably used positive electrode active material that has a spinel-type structure include the compounds exemplified above.

The chemical composition of the positive electrode active material may be an average chemical composition. The average chemical composition of the positive electrode active material means an average value of the chemical compositions of the positive electrode active material in the thickness direction of the positive electrode layer. The average chemical composition of the positive electrode active material may be analyzed and measured by breaking the solid-state battery and performing composition analysis by EDX using SEM-EDX (energy dispersive X-ray spectroscopy) in a field of view in which the whole positive electrode layer fits in the thickness direction.

The positive electrode active material can be obtained in the same manner as the negative electrode active material except that a raw material compound containing a predetermined metal atom is used, or is also available as a commercially available product.

The chemical composition and crystal structure of the positive electrode active material in the positive electrode layer are typically hardly changed by sintering as well. The positive electrode active material may have the chemical composition and crystal structure described above in the solid-state battery after sintering the positive electrode layer together with the negative electrode layer and the solid-state electrolyte layer.

The average particle diameter of the positive electrode active material is not particularly limited, may be, for example, 0.01 um or more and 10 um or less, and is preferably 0.05 um or more and 4 um or less.

The average particle diameter of the positive electrode active material can be determined in the same manner as the average particle diameter of the negative electrode active material in the negative electrode layer.

For the average particle diameter of the positive electrode active material in the positive electrode layer, the average particle diameter of the positive electrode active material used at the time of production is reflected as it is. In particular, when an LCO is used for the positive electrode particle, the average particle diameter is reflected as it is.

The particle shape of the positive electrode active material in the positive electrode layer is not particularly limited, and may be, for example, any of a spherical shape, a flattened shape, and an indefinite shape.

The volume percentage of the positive electrode active material in the positive electrode layer is not particularly limited, and is preferably 30% or more and 90% or less, more preferably 40% or more and 70% or less.

The positive electrode layer may further contain, for example, a solid-state electrolyte, a sintering auxiliary agent and/or a conductive auxiliary agent in addition to the positive electrode active material.

The type of solid-state electrolyte included in the positive electrode layer is not particularly limited. Examples of the solid-state electrolyte contained in the positive electrode layer include a solid-state electrolyte having a garnet-type structure $(Li_{6.4}Ga_{0.2})La_3Zr_2O_{12}$, $Li_{6.4}La_3(Zr_{1.6}Ta_{0.4})O_{12}$, $(Li_{6.4}Al_{0.2})La_3Zr_2O_{12}$, and $Li_{6.5}La_3(Zr_{1.5}Mo_{0.25})O_{12}$, a solid-state electrolyte having a LISICON-type structure $Li_{3+x}(V_{1-x}Si_x)O_4$, a solid-state electrolyte having a perovskite-type structure $La_{2/3-x}Li_{3x}TiO_3$, and a solid-state electrolyte having an amorphous structure $Li_3BO_3$-$Li_4SiO_4$. Among these, it is particularly preferable to use the solid-state electrolyte having the garnet-type structure and the solid-state electrolyte having the LISICON-type structure.

The solid-state electrolyte of the positive electrode layer may be obtained by the same method as in the case of the negative electrode active material except that a raw material compound containing a predetermined metal atom is used, or may be obtained as a commercially available product.

The chemical composition and crystal structure of the solid-state electrolyte in the positive electrode layer are typically hardly changed by sintering as well. The solid-state electrolyte may have the average chemical composition and crystal structure mentioned above in the solid-state battery after sintering the positive electrode layer together with the negative electrode layer and the solid-state electrolyte layer.

The volume percentage of the solid-state electrolyte in the positive electrode layer is not particularly limited, and is preferably 20% or more and 60% or less, and more preferably 30% or more and 45% or less, from the viewpoint of the balance between high energy density of the solid-state battery.

As the sintering auxiliary agent in the positive electrode layer, the same compound as the sintering auxiliary agent in the negative electrode layer can be used.

The volume percentage of the sintering auxiliary agent in the positive electrode layer is not particularly limited, and is preferably 0.1% or more and 20% or less, and more preferably 1% or more and 10% or less, from the viewpoint of the balance between high energy density of the solid-state battery.

As the conductive auxiliary agent in the positive electrode layer, the same compound as the conductive auxiliary agent in the negative electrode layer can be used.

The volume percentage of the conductive auxiliary agent in the positive electrode layer is not particularly limited, and is preferably 10% or more and 50% or less, and more preferably 20% or more and 40% or less, from the viewpoint of the balance between high energy density of the solid-state battery.

In the positive electrode layer, the porosity is not particularly limited, and is preferably 20% or less, more preferably 15% or less, still more preferably 10% or less.

For the porosity of the positive electrode layer, a value measured in the same manner as for the porosity of the negative electrode layer is used.

(Solid-state electrolyte layer)

In the present invention, the solid-state electrolyte layer is not particularly limited. The solid-state electrolyte layer preferably contains a solid-state electrolyte having a garnet-type structure from the viewpoint of further suppressing side reactions with the negative electrode active material during firing and further improving the utilization factor of the active material. The solid-state electrolyte layer may have the form of a sintered body including the solid-state electrolyte.

The garnet-type solid-state electrolyte contained in the solid-state electrolyte layer is the same as the solid-state electrolyte having a garnet-type structure that is contained in the negative electrode layer and may be selected from the same range as the solid-state electrolyte having a garnet-type structure described in the description of the negative electrode layer. When the solid-state electrolyte layer and the negative electrode layer both include a solid-state electrolyte that has a garnet-type structure, the solid-state electrolyte that has a garnet-type structure, included in the solid-state electrolyte layer, and the solid-state electrolyte that has a garnet-type structure, included in the negative electrode layer, may have the same chemical composition or different chemical compositions from each other.

The garnet-type solid-state electrolyte contained in the solid-state electrolyte layer is not particularly limited as long as it has a garnet-type crystal structure, and for example, similarly to the garnet-type solid-state electrolyte contained in the negative electrode layer, it is preferable that the garnet-type solid-state electrolyte has a chemical composition within the range of the chemical composition represented by the general formula (G) described above. When the solid-state electrolyte layer contains the solid-state electrolyte having the chemical composition, the utilization factor of the negative electrode active material in the interface region between the negative electrode layer and the solid-state electrolyte layer can be further improved.

In the solid-state electrolyte layer, the chemical composition of the solid-state electrolyte may be an average chemical composition. The average chemical composition of the solid-state electrolyte (in particular, the solid-state electrolyte that has a garnet-type structure) in the solid-state electrolyte layer means the average value for the chemical composition of the solid-state electrolyte in the thickness direction of the solid-state electrolyte layer. The average chemical composition of the solid-state electrolyte may be analyzed and measured by breaking the solid-state battery and performing composition analysis by EDX using SEM-EDX (energy dispersive X-ray spectroscopy) in a field of view in which the whole solid-state electrolyte layer fits in the thickness direction.

The chemical composition and crystal structure of the solid-state electrolyte in the solid-state electrolyte layer are typically hardly changed by sintering as well. The solid-state electrolyte may have the chemical composition and crystal structure mentioned above in the solid-state battery after sintering the solid-state electrolyte layer together with the negative electrode layer and positive electrode layer.

The volume percentage of the solid-state electrolyte in the solid-state electrolyte layer is not particularly limited, and is preferably 10% or more and 100% or less, more preferably 20% or more and 100% or less, and still more preferably 30% or more and 100% or less.

The volume percentage of the solid-state electrolyte in the solid-state electrolyte layer can be measured in the same manner as the volume percentage of the solid-state electrolyte in the negative electrode layer.

The solid-state electrolyte layer may further contain, for example, a sintering auxiliary agent and the like in addition to the solid-state electrolyte. At least one of the negative electrode layer and the solid-state electrolyte layer, preferably the both further contain a sintering auxiliary agent. The fact that at least one of the negative electrode layer and the solid-state electrolyte layer further contains a sintering auxiliary agent means that one of the negative electrode layer or the solid-state electrolyte layer may further contain a sintering auxiliary agent, or the both may further contain a sintering auxiliary agent.

As the sintering auxiliary agent in the solid-state electrolyte layer, the same compound as the sintering auxiliary agent in the negative electrode layer can be used.

The volume percentage of the sintering auxiliary agent in the solid-state electrolyte layer is not particularly limited, and is preferably 0.1% or more and 20% or less, more preferably 1% or more and 10% or less, from the viewpoint of the balance between further improved utilization factor of the negative electrode active material and the increased energy density of the solid-state battery.

The thickness of the solid-state electrolyte layer is typically 0.1 um or more and 30 um or less, and from the viewpoint of reducing the thickness of the solid-state electrolyte layer, it is more preferably 1 um to 20 um.

As the thickness of the solid-state electrolyte layer, an average value of thicknesses measured at any ten points in an SEM image is used.

In the solid-state electrolyte layer, the porosity is not particularly limited, but is preferably 20% or less, more preferably 15% or less, and still more preferably 10% or less.

For the porosity of the solid-state electrolyte layer, a value measured in the same manner as for the porosity of the negative electrode layer is used.

The solid-state battery of the present invention may further include any member that can be included in a conventional solid-state battery, such as a positive electrode collector layer, a negative electrode collector layer, a protective layer, and an end surface electrode.

[Method of producing solid-state battery]

The solid-state battery can be produced, for example, by a so-called green sheet method, a printing method, or a combined method thereof.

The green sheet method will be described.

First, a paste is prepared by appropriately mixing a positive electrode active material with a solvent, a binder, and the like. The paste is applied onto a sheet and dried to form a first green sheet for forming a positive electrode layer. The first green sheet may contain a solid-state electrolyte, a conductive auxiliary agent, a sintering auxiliary agent, and/or the like.

A solid-state electrolyte, solvent, a binder, and the like are appropriately mixed with a negative electrode active material to prepare a paste. The paste is applied onto a sheet, and dried to form a second green sheet for constituting the negative electrode layer. The second green sheet may contain a conductive auxiliary agent, a sintering auxiliary agent, and/or the like.

A solvent, a binder, and the like are appropriately mixed with a solid-state electrolyte to prepare a paste. The paste is applied onto a sheet and dried to form a third green sheet for forming a solid-state electrolyte layer. The third green sheet may contain a sintering auxiliary agent and the like.

The solvent and the binder for producing the first to third green sheets are not particularly limited. Examples of the solvent include a solvent that may be used for producing a positive electrode layer, a negative electrode layer, or a solid-state electrolyte layer in the field of the solid-state battery is used. As a specific example of the solvent, a solvent capable of using the binder described later is usually used. Examples of such a solvent include alcohols such as 2-propanol. As the binder, for example, a binder that may be used for producing a positive electrode layer, a negative electrode layer, or a solid-state electrolyte layer in the field of the solid-state battery is used. Specific examples of such a binder include a butyral resin and an acrylic resin.

Next, the first to third green sheets are appropriately stacked to prepare a laminate. The produced laminate may be pressed. Examples of a preferable pressing method include an isostatic pressing method. Thereafter, the laminate is heated to, for example, a temperature of 300°C or higher and 500°C or lower to remove the binder, and then sintered at 600 to 900°C to obtain a solid-state battery.

The printing method will be described. Printing is used in a concept including coating.

The printing method is the same as the green sheet method except for the following matters.

· An ink for each layer having the same composition as the composition of the paste for each layer for obtaining a green sheet is prepared except that the blending amounts of the solvent and the resin are adjusted to those suitable for use as the ink.

· The ink for each layer is printed and stacked to produce a laminate.

Hereinafter, the present invention will be described in more detail based on specific examples, but the present invention is not limited to the following examples at all and may be appropriately changed and implemented without changing the gist thereof.

EXAMPLES

<Experimental Example 1>

(Production of garnet-type solid-state electrolyte)

Raw materials including lithium hydroxide monohydrate (LiOH·$H_2O$), lanthanum hydroxide (La(OH)$_3$), zirconium oxide (ZrO$_2$), and tantalum oxide (Ta$_2$O$_5$) were weighed so that the solid-state electrolyte had the composition shown in Table 1. Next, water was added, the resulting mixture was sealed in a 100 ml polyethylene polypot, and the polypot was rotated on a pot rack at 150 rpm for 16 hours to mix the raw materials. Lithium hydroxide monohydrate LiOH · $H_2O$ serving as a Li source was charged in excess of 3 mass% with respect to the target composition, in consideration of Li deficiency at the time of sintering. Next, the resultant slurry was dried and then sintered in an oxygen gas at 900°C for 5 hours. Next, the resultant sintered product to which a mixed solvent of toluene and acetone was added was pulverized for 6 hours with a planetary ball mill and then dried to give a solid-state electrolyte powder having the composition shown in Table 1.

(Production of nasicon-type solid-state electrolyte)

Raw materials including lithium carbonate (Li$_2$CO$_3$), aluminum oxide (Al$_2$O$_3$), germanium oxide (GeO$_2$), and

ammonium dihydrogen phosphate ($(NH_4)H_2PO_4$) were weighed so that the solid-state electrolyte had the composition shown in Table 1, and thoroughly mixed in a mortar. The mixture was calcined at 400°C for 2 hours under an air atmosphere. Water was added to the calcined powder, and the calcined powder was sealed in a 100 ml polyethylene polypot, and the polypot was rotated on a pot rack at 150 rpm for 16 hours to pulverize the calcined powder. Next, the resultant slurry was dried and then sintered in an oxygen gas at 850°C for 5 hours. Next, the resultant sintered product to which a mixed solvent of toluene and acetone was added was pulverized for 6 hours with a planetary ball mill and then dried to give a solid-state electrolyte powder having the composition shown in Table 1.

[Production of electrode active material]

Raw materials containing lithium carbonate ($Li_2CO_3$) and tungsten oxide ($WO_3$) were weighed so that the negative electrode active material had the Li/W ratio shown in Table 1, and were well mixed in a mortar. In Example 3, the Li/W ratio was weighed so as to be 6.0. Next, ethanol was added, the resulting mixture was sealed in a 100 ml polyethylene polypot, and the polypot was rotated on a pot rack at 150 rpm for 16 hours to mix the raw materials. The obtained slurry was dried and then sintered in the air under the following conditions. The negative electrode active materials of Comparative Examples 1 and 2 and Example 2 were sintered at 650°C for 5 hours. The negative electrode active materials of Comparative Example 4 and Examples 1 and 3 were sintered at 750°C for 5 hours. Next, the resultant sintered product to which a mixed solvent of toluene and acetone was added was pulverized for 6 hours with a planetary ball mill and then dried to obtain a negative electrode active material powder in Table 1. The electrode active material (purity of 99% or more) having the composition shown in Comparative Example 3 was obtained by pulverizing a commercially available product with a planetary ball mill for 6 hours, and then drying the pulverized product.

<Examples 1 to 3 and Comparative Examples 1 to 4>

A sample obtained by mixing a solid-state electrolyte shown in Table 1 with an electrode active material and sintering the mixture at 800°C was analyzed by an XRD method to evaluate the presence or absence of decomposition of the solid-state electrolyte and the electrode active material.
A case where a peak derived from both or any one of the solid-state electrolyte and the electrode active material was not observed after sintering was defined as "decomposed", and a case where a peak derived from both the solid-state electrolyte and the electrode active material was observed after sintering was defined as "not decomposed".

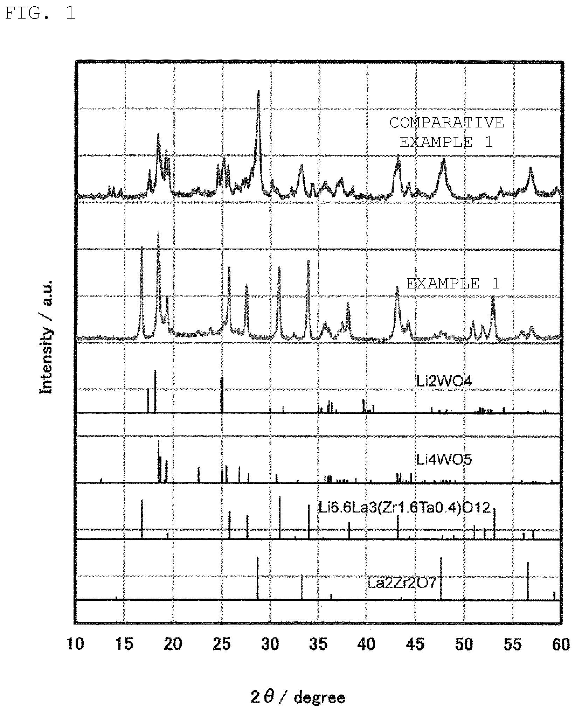

FIG. 1 illustrates the XRD patterns of Comparative Example 1 and Example 1 after sintering and the XRD pattern of one of the solid-state electrolyte and the electrode active material after sintering.
From Comparative Example 1, it was found that when the electrode active material having a Li/W ratio of 2 was used, the peak derived from the garnet-type solid-state electrolyte wholly disappeared after sintering, and the solid-state electrolyte was decomposed at the time of sintering. When an active material having a Li/W ratio of 2 or less was used, it was found that the garnet-type solid-state electrolyte was decomposed at the time of sintering (Table 1). When a negative electrode active material having a Li/W ratio of 2 was used as in Comparative Example 1, it is considered that the solid-state electrolyte (LLZ) was decomposed by sintering to produce $La_2Zr_2O_7$ having no ionic conductivity.
From Example 1, it was found that when an electrode active material having a Li/W ratio of more than 2 (for example, 4) was used, a peak derived from both the electrode active material and the garnet-type solid-state electrolyte was observed after sintering, and a side reaction between the electrode active material and the garnet-type solid-state electrolyte hardly proceeded. As in Example 1, when the negative electrode active material having a Li/W ratio of more than 2 (for example, 4) was used, it was found that both the negative electrode active material and the solid-state electrolyte (LLZ) remained also by sintering. Since the side reaction hardly proceeds at the time of sintering, good charging and discharging characteristics are easily obtained.
From the above, it was found that when the electrode active material having a Li/W ratio of more than 2 is used, a side reaction at the time of sintering with the garnet-type solid-state electrolyte can be extremely suppressed.
From Comparative Example 4, it was found that when a NASICON-type solid-state electrolyte was used as the solid-state electrolyte, the reaction proceeded in case where the electrode active material having a Li/W ratio of more than 2 was used as well.
Therefore, it was found that the effect of the present invention can be obtained by a combination of the electrode active material having a Li/W ratio of more than 2 and the garnet-type solid-state electrolyte.

[Table 1]

| | Solid-state electrolyte | Electrode active material [Li/M] | Decomposition of solid-state electrolyte and electrode active material |
|---|---|---|---|
| Comparative Example 1 | Li6.6La3(Zr1.6Ta0.4)O12 (Garnet-type) | Li2WO4 [2] | Presence |
| Comparative Example 2 | Li6.6La3(Zr1.6Ta0.4)O12 (Garnet-type) | Li2W2O4[1] | Presence |
| Comparative Example 3 | Li6.6La3(Zr1.6Ta0.4)O12 (Garnet-type) | WO3[0] | Presence |
| Comparative Example 4 | Li1.5Al0.5Ge1.5(PO4)3 (NaSICON-type) | High-temperature phase Li4WOS[4] | Presence |
| Example 1 | Li6.6La3(Zr1.6Ta0.4)O12 (Garnet-type) | High-temperature phase Li4WOS[4] | Absence |
| Example 2 | Li6.6La3(Zr1.6Ta0.4)O12 (Garnet-type) | Low-temperature phase Li4WOS[4] | Absence |
| Example 3 | Li6.6La3(Zr1.6Ta0.4)O12 (Garnet-type) | Li6WO6[6] | Absence |

In Table 1, particularly, "high-temperature phase $Li_4WO_5$" means "single-phase structure of high-temperature phase $Li_4WO_5$-type crystal structure". The crystal structure was determined by the above-described method based on peaks and intensities unique to each crystal structure in X-ray diffraction (XRD using CuKα rays). The same applies to the following Tables 2 and 3.

<Experimental Example 2>

(Production of garnet-type solid-state electrolyte)

A solid-state electrolyte powder having the composition shown in Table 2 was obtained by the same method as the method for producing a garnet-type solid-state electrolyte in Experimental Example 1 except that raw materials were selected and weighed so that the composition of the garnet-type solid-state electrolyte was the composition shown in Table 2. As raw materials, gallium oxide ($Ga_2O_3$), aluminum oxide ($Al_2O_3$), scandium oxide ($S_{C2}O_3$), niobium oxide ($Nb_2O_5$), tungsten oxide ($WO_3$), and bismuth oxide ($Bi_2O_3$) were used in addition to the same raw materials as the raw materials described in "Production of garnet-type solid-state electrolyte" of Experimental Example 1.

[Production of negative electrode active material]

Raw materials including lithium carbonate ($Li_2CO_3$), tungsten oxide ($WO_3$), molybdenum oxide ($MoO_3$), zirconium oxide ($ZrO_2$), tantalum oxide ($Ta_2O_5$), and magnesium oxide (MgO) were weighed so that the composition of the negative electrode active material was the element ratio shown in Table 2. In Example 6, the Li/W ratio was weighed so as to be 3.7. For Example 7, the Li/W ratio was weighed so as to be 6.0. For Example 11, the Li/W ratio was weighed so as to be 4.4. Next, ethanol was added, the resulting mixture was sealed in a 100 ml polyethylene polypot, and the polypot was rotated on a pot rack at 150 rpm for 16 hours to mix the raw materials. The obtained slurry was dried and then sintered in the air under the following conditions. The negative electrode active materials of Comparative Examples 5 and 6 and Examples 5 and 6 were sintered at 650°C for 5 hours. The negative electrode active materials of Comparative Example 4 and Examples 4, 7, 8, 9, 10, 11, and 12 were sintered at 750°C for 5 hours. Next, the resultant sintered product to which a mixed solvent of toluene and acetone was added was pulverized for 6 hours with a planetary ball mill and then dried to obtain a negative electrode active material powder in Table 1. The electrode active material (purity of 99% or more) having the composition described in Comparative Example 7 was obtained by pulverizing a commercially available product with a planetary ball mill for 6 hours, and then drying the pulverized product.

(Production of solid-state electrolyte layer (garnet-type solid-state electrolyte substrate))

A garnet-type solid-state electrolyte powder having a composition of " $(Li_{6.4}Ga_{0.05}Al_{0.15})La_3Zr_2O_{12}$ " was obtained by the same method as the method for producing the garnet-type solid-state electrolyte in Experimental Example 1 except that raw materials were selected and weighed so that the composition of the garnet-type solid-state electrolyte was " $(Li_{6.4}Ga_{0.05}Al_{0.15})La_3Zr_2O_{12}$ ".

The obtained garnet-type solid-state electrolyte powder, a butyral resin, and an alcohol were mixed at a mass ratio of 200 : 15 : 140, and then the alcohol was removed on a hot plate at 80°C to give a solid-state electrolyte powder coated with the butyral resin serving as a binder. Next, the solid-state electrolyte powder coated with the butyral resin was pressed at 90 MPa and formed into a tablet using a tableting machine. The resultant solid-state electrolyte tablet was adequately coated with a mother powder, sintered under an oxygen atmosphere at a temperature of 500°C to remove the butyral resin, and then sintered under an oxygen atmosphere at about 1200°C for 3 hours. Thereafter, the temperature was lowered to give a solid-state electrolyte sintered body. A surface of the resultant sintered body was polished to give a garnet-type solid-state electrolyte substrate (solid-state electrolyte layer).

(Production of sintering auxiliary agent powder)

Lithium hydroxide monohydrate $LiOH \cdot H_2O$, boron oxide $B_2O_3$, and aluminum oxide $Al_2O_3$ were appropriately weighed, mixed with a mortar, and then sintered at 650°C for 5 hours. The resultant sintered powder was pulverized with a mortar, mixed, and then sintered at 680°C for 40 hours. The resultant sintered powder to which a mixed solvent of toluene and acetone was added was pulverized for 6 hours using a planetary ball mill, and dried to produce a sintering auxiliary agent powder represented by the composition formula $Li_{2.4}Al_{0.2}BO_3$.

(Examples 4 to 12 and Comparative Examples 5 to 7: Production of solid-state battery)

A solid-state electrolyte powder and a negative electrode active material powder, a sintering auxiliary agent powder, and a conductive auxiliary agent powder (Ag particles) shown in Table 2 were weighed so as to have a volume ratio of 35 : 30 : 5 : 30, and kneaded with alcohol and a binder to prepare a negative electrode layer paste. Next, the negative electrode layer paste was applied onto the solid-state electrolyte layer (that is, the solid-state electrolyte substrate) and dried to obtain a laminate. The laminate was heated to 400°C to remove the binder, and then heat-treated at 800°C for 2 hours in the air atmosphere to prepare a laminate of a solid-state electrolyte layer and a negative electrode layer. Thereafter, metal lithium as a counter electrode and a reference electrode was attached onto the surface of the solid-state electrolyte layer of the laminate on the side opposite to the negative electrode layer-side surface, and the resulting laminate was sealed with a 2032-type coin cell to produce a solid-state battery.

(Evaluation of solid-state battery; Utilization factor of negative electrode active material)

The solid-state batteries prepared in comparative examples and examples were evaluated at 25°C according to the following contents.

Charge was constant current constant potential charge, and the charge lower limit potential was 0.2 V (vs. Li/Li$^+$). The charging end condition was a time point when the charging current was attenuated to 0.02 C. Discharge was constant current discharge, and the discharging end potential was 3.0 V (vs. Li/Li$^+$). The constant current value of the charging and discharging currents was 0.1 C. From the measured initial reversible capacity and theoretical values of the initial reversible capacity, the utilization factor of the negative electrode active material was calculated based on the following formula and evaluated according to the following criteria. The theoretical value of the initial reversible capacity was defined as the amount of electricity when a two-electron reaction with respect to W proceeded. In the present invention, the charge corresponds to a reduction reaction in which lithium ions are inserted into the negative electrode active material, and the discharge corresponds to an oxidation reaction in which lithium ions are desorbed from the negative electrode active material.

[Mathematical Formula 2]

$$\text{Utilization Factor (\%)} = \text{(measured initial reversible capacity)} / \text{(theoretical value of initial reversible capacity)}$$

⊚; 80% or more (best);
⊙; 72% or more and less than 80% (excellent);
○; 60% or more and less than 72% (good);

△: 50% or more and less than 60% (no problem in practical use):

×: Less than 50% (problem in practical use)

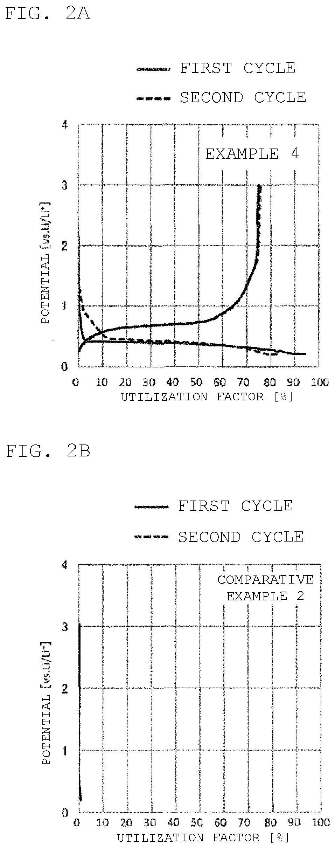

Description of FIGS. 2A and 2B

FIGS. 2A and 2B illustrate charging and discharging curves of the solid-state batteries prepared in Example 4 and Comparative Example 2, respectively. From the charging and discharging curve in FIG. 2B, in Comparative Example 2, the utilization factor was about 5% or less, and charging and discharging was impossible. On the other hand, from the charging and discharging curve in FIG. 2A, in Example 4, a capacity component derived from the Li insertion/removal reaction into/from the high-temperature phase $Li_4WO_5$ is observed in the potential range of 0.2 V to 3.0 V (vs. $Li/Li^+$), and it is found that the battery functions as a solid-state battery.

When the negative electrode active material having a Li/W ratio of 2 or less was used, the utilization factor of the negative electrode active material was 5% or less. From Experimental Example 1, it is considered that this is because (1) a side reaction occurred between the negative electrode active material and the garnet-type solid-state electrolyte at the time of sintering, and the negative electrode active material was deactivated, and/or (2) an ion path in the electrode mixture was not formed due to decomposition of the solid-state electrolyte.

It was found that the use of the negative electrode active material having a Li/W ratio of more than 2 (for example, 4 or more) makes it possible to charge and discharge the solid-state battery. In particular, it was found that a high reversible capacity is obtained when the crystal structure of the negative electrode active material has a high-temperature phase $Li_4WO_5$ structure.

[Table 2]

| | Negative electrode layer | | | Utilization factor |
|---|---|---|---|---|
| | Negative electrode active material | | Solid-state electrolyte | |
| | Chemical composition | Crystal structure | | |
| Comparative Example 5 | Li2WO4[2] | - | Li6.6La3 (Zr1.6Ta0.4)O12 (Garnet-type) | ~5%(×) |
| Comparative Example 6 | Li2W2O7 [1] | - | Li6.6La3 (Zr1.6Ta0.4)O12 (Garnet-type) | ~5%(×) |
| Comparative Example 7 | WO3 [0] | - | Li6.6La3 (Zr1.6Ta0.4)O12 (Garnet-type) | ~5%(×) |
| Example 4 | Li4WOS [4] | High-temperature phase Li4WOS | Li6.6La3 (Zr1.6Ta0.4)O12 (Garnet-type) | 75%(◎) |
| Example 5 | Li4WOS [4] | High-temperature phase Li4WO5+High-temperature phase Li4WO5 (mixed phase) | Li6.6La3 (Zr1.6Ta0.4)O12 (Garnet-type) | 53%(△) |
| Example 6 | Li3.8W1.03O5 [3.7] | High-temperature phase Li4WO5 | Li6.6La3 (Zr1.6Ta0.4)O12 (Garnet-type) | 70%(○) |
| Example 7 | Li6WO6 [6] | Li6WO6 | Li6.6La3 (Zr1.6Ta0.4)O12 (Garnet-type) | 50%(△) |
| Example 8 | Li4(W0.8Mo0.2)O5 [4] | High-temperature phase Li4WO5 | Li6.6La3 (Zr1.6Ta0.4)O12 (Garnet-type) | 63%(○) |

(continued)

| | Negative electrode layer | | | Utilization factor |
|---|---|---|---|---|
| | Negative electrode active material | | Solid-state electrolyte | |
| | Chemical composition | Crystal structure | | |
| Example 9 | Li4.4(W0.8Zr0.2)O5 [4.4] | High-temperature phase Li4WO5 | Li6.6La3 (Zr1.6Ta0.4)O12 (Garnet-type) | 66%(○) |
| Example 10 | Li4.1(W0.9Ta0.1)O5 [4.1] | High-temperature phase Li4WO5 | Li6.6La3 (Zr1.6Ta0.4)O12 (Garnet-type) | 68%(○) |
| Example 11 | L14.2W0.96O5 [4.4] | High-temperature phase Li4WO5 | Li6.6La3 (Zr1.6Ta0.4)O12 (Garnet-type) | 72%(◎) |
| Example 12 | Li3.8W0.96Mg0.2O5 [4] | Low-temperature phase Li4WO5 | Li6.6La3 (Zr1.6Ta0.4)O12 (Garnet-type) | 55% (△) |

<Experimental Example 3>

(Examples 13 to 19: Production of solid-state battery)

A solid-state battery was produced in the same manner as in Experimental Example 2 except that the negative electrode active material and the solid-state electrolyte had the compositions shown in Table 3. The negative electrode active material was fired under the same conditions as in Example 4.

(Evaluation of solid-state battery; Utilization factor of negative electrode active material)

The utilization factor of the negative electrode active material was calculated and evaluated in the same manner as in Experimental Example 2.
It has been found that as long as the solid-state electrolyte has a garnet-type crystal structure, the solid-state battery can operate well regardless of the composition of the solid-state electrolyte.
It has been found that inclusion of W in the garnet-type solid-state electrolyte is preferable because a higher utilization factor is obtained.

[Table 3]

| | Negative electrode layer | | | Utilization factor |
|---|---|---|---|---|
| | Negative electrode active material | | Solid-state electrolyte | |
| | Chemical composition | Crystal structure | | |
| Example 13 | Li4WO5 [4] | High-temperature phase Li4WO5 | (Li6.4Ga0.05Al0.15)La3Zr2O12 (Garnet-type) | 78%(◎) |
| Example 14 | Li4WO5 [4] | High-temperature phase Li4WO5 | (Li6.4A10.2)La3Zr2O12(Garnet-type) | 65%(○) |
| Example 15 | Li4WO5 [4] | High-temperature phase Li4WO5 | (Li6.4Ga0.15Sc0.05)La3Zr2O12 (Garnet-type) | 77%(◎) |
| Example 16 | Li4WO5 [4] | High-temperature phase Li4WO5 | Li6.8La3(Zr1.75Nb0.25)O12(Garnet-type) | 72%(◎) |

(continued)

| | Negative electrode layer | | | Utilization factor |
| --- | --- | --- | --- | --- |
| | Negative electrode active material | | Solid-state electrolyte | |
| | Chemical composition | Crystal structure | | |
| Example 17 | Li4WO5 [4] | High-temperature phase Li4WO5 | Li6.4La3(Zr1.5Ta0.4W0.1)O12 (Garnet-type) | 85%(◎◎) |
| Example 18 | Li4WO5 [4] | High-temperature phase Li4WO5 | Li6.3La3(Zr1.45Ta0.4W0.15)O12 (Garnet-type) | 87%(◎◎) |
| Example 19 | Li4WO5 [4] | High-temperature phase Li4WO5 | Li6.5La3(Zr1.53Ta0.4Bi0.07)O12 (Garnet-type) | 76%(◎) |

INDUSTRIAL APPLICABILITY

The solid-state battery of the present invention can be used in various fields where use of a battery or storage of electricity is assumed. Although it is merely an example, the solid-state battery according to an embodiment of the present invention can be used in the field of electronics mounting. The solid-state battery according to an embodiment of the present invention can also be used in the fields of electricity, information, and communication in which mobile devices and the like are used (for example, electric and electronic equipment fields or mobile equipment fields including mobile phones, smartphones, smartwatches, notebook computers, and small electronic machines such as digital cameras, activity meters, arm computers, electronic papers, wearable devices, RFID tags, card-type electronic money, and smartwatches), home and small industrial applications (for example, the fields of electric tools, golf carts, and home, nursing, and industrial robots), large industrial applications (for example, the fields of forklift, elevator, and harbor crane), transportation system fields (for example, the fields of hybrid vehicles, electric vehicles, buses, trains, power-assisted bicycles, electric two-wheeled vehicles, and the like), power system applications (for example, fields such as various types of power generation, road conditioners, smart grids, and household power storage systems), medical applications (medical device fields such as hearing aid buds), pharmaceutical applications (fields such as dosage management systems), IoT fields, space and deep sea applications (for example, fields such as space probes and submersibles), and the like.

**Claims**

1. A solid-state battery comprising:

   a positive electrode layer, a negative electrode layer, and a solid-state electrolyte layer disposed between the positive electrode layer and the negative electrode layer,
   wherein the negative electrode layer includes a negative electrode active material containing Li (lithium), M [M is one or more elements selected from the group consisting of W (tungsten), Mo (molybdenum), Ta (tantalum), and Zr (zirconium)], and O (oxygen), and having a molar ratio (Li/M) of a Li content to a M content of more than 2.0, and a garnet-type solid-state electrolyte.

2. The solid-state battery according to claim 1, wherein the M includes W.

3. The solid-state battery according to claim 1 or 2, wherein the negative electrode active material has a chemical composition represented by general formula (N): [Chemical Formula 1]

$$\text{Li}_\alpha \text{M}_\beta \text{M'}_\gamma \text{O}_\omega \qquad (N)$$

(In the formula (N), M is one or more elements selected from the group consisting of W (tungsten), Mo (molybdenum), Ta (tantalum), and Zr (zirconium);

M' is one or more elements selected from the group consisting of Na (sodium), K (potassium), Ca (calcium), Ti (titanium), V (vanadium), Sn (tin), Nb (niobium), Zn (zinc), Mn (manganese), Mg (magnesium), Al (aluminum),

and Ga (gallium);

$\alpha$ and $\beta$ satisfy $2 < \alpha < 10$, $0 < \beta < 1.5$ and $\alpha/\beta > 2$;

$\gamma$ satisfies $0 \leq \gamma < 3$; and

$\omega$ satisfies $4 < \omega < 9$).

4. The solid-state battery according to any one of claims 1 to 3, wherein the negative electrode active material has one or more crystal structures selected from the group consisting of a low-temperature phase $Li_4WO_5$-type crystal structure, a high-temperature phase $Li_4WO_5$-type crystal structure, and a $Li_6WO_6$-type crystal structure.

5. The solid-state battery according to claim 1 to 3, wherein the negative electrode active material has a low-temperature phase $Li_4WO_5$-type crystal structure or a high-temperature phase $Li_4WO_5$-type crystal structure.

6. The solid-state battery according to claim 1 to 5, wherein the garnet-type solid-state electrolyte contains Li (lithium), La (lanthanum), Zr (zirconium), and O (oxygen) in the chemical composition.

7. The solid-state battery according to claim 6, wherein the garnet-type solid-state electrolyte further contains W (tungsten) in the chemical composition.

8. The solid-state battery according to any one of claims 1 to 7, wherein garnet-type solid-state electrolyte has a chemical composition represented by general formula (G):

[Chemical Formula 2]

$$Li_\alpha A_x B^I_{\beta-\gamma} B^{II}_y D^I_{\gamma-} zD^{II}_z O_\omega \qquad (G)$$

[in the formula (G), A is one or more elements that is made into a solid solution in an Li site of the oxide having the garnet-type crystal structure;

$B^I$ is one or more elements selected from the group consisting of elements having tervalent valency among elements belonging to Groups 1 to 3 having eight-coordination with oxygen;

$B^{II}$ is one or more elements selected from the group consisting of elements having valences other than tervalent valency among elements belonging to Groups 1 to 3 having eight-coordination with oxygen;

$D^I$ is one or more elements selected from the group consisting of elements having tetravalent valency among transition elements and typical elements belonging to Groups 12 to 15 having six-coordination with oxygen;

$D^{II}$ is one or more elements selected from the group consisting of elements having valences other than tetravalent valency among transition elements and typical elements belonging to Groups 12 to 15 having six-coordination with oxygen;

$\alpha$ satisfies $3.0 \leq \alpha \leq 8.0$;

$\beta$ satisfies $2.5 \leq \beta \leq 3.5$;

$\gamma$ satisfies $1.5 \leq \gamma \leq 2.5$;

$\omega$ satisfies $11 \leq \omega \leq 13$;

x satisfies $0 \leq x \leq 1.0$;

y satisfies $0 \leq y \leq 1.0$; and

z satisfies $0 \leq z \leq 2.2$.

9. The solid-state battery according to claim 8 dependent on claim 3, wherein the negative electrode active material has a chemical composition represented by the general formula (N) and has a single-phase structure of a high-temperature phase $Li_4WO_5$-type crystal structure.

10. The solid-state battery according to claim 9, wherein the negative electrode active material, in the general formula (N), the $\alpha/\beta$ satisfies $3.8 \leq \alpha/\beta \leq 6.5$, and M is W (tungsten),

the garnet-type solid-state electrolyte satisfies the following condition (s1) in the general formula (G):

Condition (s1): x = 0, or the A contains Ga and $0 < x \leq 1.0$ is satisfied.

11. The solid-state battery according to claim 9, wherein in the negative electrode active material, in the general formula (N), the $\alpha/\beta$ satisfies $3.8 \leq \alpha/\beta \leq 6.5$, and M is W (tungsten),

the garnet-type solid-state electrolyte satisfies the following conditions (s1) and (s2) in the general formula (G) :

Condition (s1): x = 0 or the A contains Ga and $0 < x \leq 1.0$ is satisfied; and

Condition (s2): the $D^{II}$ includes Ta (tantalum) and W (tungsten).

12. The solid-state battery according to any one of claims 1 to 11, wherein the solid-state electrolyte layer contains a garnet-type solid-state electrolyte.

13. The solid-state battery according to any one of claims 1 to 12, wherein the positive electrode layer and the negative electrode layer are layers capable of occluding and releasing lithium ions.

14. The solid-state battery according to any one of claims 1 to 12, wherein the solid-state battery is a co-sintered solid-state battery.

FIG. 1

$2\theta$ / degree

FIG. 2A

FIG. 2B

## INTERNATIONAL SEARCH REPORT

| | International application No. |
|---|---|
| | **PCT/JP2022/008034** |

### A. CLASSIFICATION OF SUBJECT MATTER

*H01M 4/131*(2010.01)i; *H01M 4/485*(2010.01)i; *H01M 4/505*(2010.01)i; *H01M 4/62*(2006.01)i; *H01M 10/052*(2010.01)n; *H01M 10/0562*(2010.01)i; *H01M 10/0585*(2010.01)i
FI: H01M10/0585; H01M10/0562; H01M4/62 Z; H01M4/485; H01M4/131; H01M4/505; H01M10/052

According to International Patent Classification (IPC) or to both national classification and IPC

### B. FIELDS SEARCHED

Minimum documentation searched (classification system followed by classification symbols)

H01M4/131; H01M4/485; H01M4/505; H01M4/62; H01M10/052; H01M10/0562; H01M10/0585

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2019/044902 A1 (MURATA MANUFACTURING CO., LTD.) 07 March 2019 (2019-03-07) | 1-14 |
| A | JP 2014-170734 A (MURATA MANUFACTURING CO., LTD.) 18 September 2014 (2014-09-18) | 1-14 |
| A | WO 2019/225437 A1 (HONDA MOTOR CO., LTD.) 28 November 2019 (2019-11-28) | 1-14 |
| A | JP 2017-135041 A (GS YUASA CORP.) 03 August 2017 (2017-08-03) | 1-14 |
| A | JP 2017-117775 A (GS YUASA CORP.) 29 June 2017 (2017-06-29) | 1-14 |
| A | JP 2018-107130 A (GS YUASA CORP.) 05 July 2018 (2018-07-05) | 1-14 |

☐ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **05 April 2022** | **19 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/008034**

| Patent document cited in search report | | | Publication date (day/month/year) | Patent family member(s) | | | Publication date (day/month/year) |
|---|---|---|---|---|---|---|---|
| WO | 2019/044902 | A1 | 07 March 2019 | US | 2020/0106130 | A1 | |
| | | | | CN | 111033858 | A | |
| JP | 2014-170734 | A | 18 September 2014 | US | 2014/0186720 | A1 | |
| WO | 2019/225437 | A1 | 28 November 2019 | CN | 112189277 | A | |
| JP | 2017-135041 | A | 03 August 2017 | (Family: none) | | | |
| JP | 2017-117775 | A | 29 June 2017 | (Family: none) | | | |
| JP | 2018-107130 | A | 05 July 2018 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016201223 A

**Non-patent literature cited in the description**

- **R. MURUGAN et al.** *Angew. Chem. Int. Ed.,* 2007, vol. 46, 7778-7781